# EUROPEAN PATENT SPECIFICATION

(11) **EP 4 464 095 B1**
(45) Date of publication and mention of the grant of the patent: **11.11.2026**
(21) Application number: 22945159.6
(22) Date of filing: 06.06.2022
(51) Int. Cl.: H04L 1/1867, H04W 72/04, H04L 1/1829

(54) **NTN IOT HARQ DISABLING WITH DCI INDICATION**
NTN-IOT-HARQ-ABSCHALTUNG MIT DCI-ANZEIGE
DÉSACTIVATION DE HARQ IDO NTN À INDICATION DE DCI

(43) Date of publication of application: 20.11.2024
(73) Proprietor: Lenovo (Beijing) Limited, Beijing 100085 (CN)
(72) Inventor: YAN, Zhi, Beijing 100052 (CN); LIU, Hongmei, Beijing 102208 (CN); ZHANG, Yuantao, Beijing 100013 (CN); MA, Ruixiang, Beijing 100085 (CN); WANG, Haiming, Beijing 100011 (CN)
(74) Representative: Openshaw & Co.
(86) International application number: PCT/CN2022/097148
(87) International publication number: WO 2023/236009

(56) References cited:
- WO-A1-2020/221078
- WO-A1-2021/064681
- WO-A1-2021/159325
- US-A1- 2021 258 104
- US-A1- 2022 109 529
- MODERATOR (LENOVO): "Feature lead summary #3 on disabling of HARQ feedback for IoT NTN", vol. RAN WG1, no. e-Meeting; 20220509 - 20220520, 20 May 2022 (2022-05-20), XP052204361, Retrieved from the Internet <URL:https://ftp.3gpp.org/tsg_ran/WG1_RL1/TSGR1_109-e/Docs/R1-2205555.zip R1-2205555.docx> [retrieved on 20220520]
- NEC: "Disabling of HARQ feedback for IoT NTN", vol. RAN WG1, no. e-Meeting; 20220509 - 20220520, 29 April 2022 (2022-04-29), XP052153271, Retrieved from the Internet <URL:https://ftp.3gpp.org/tsg_ran/WG1_RL1/TSGR1_109-e/Docs/R1-2203937.zip R1-2203937 R18 9_12_2 Disabling of HARQ feedback for IoT NTN_final.docx> [retrieved on 20220429]
- LENOVO ET AL: "Disabling of HARQ feedback for IoT NTN", vol. RAN WG1, no. e-Meeting; 20220509 - 20220520, 29 April 2022 (2022-04-29), XP052153562, Retrieved from the Internet <URL:https://ftp.3gpp.org/tsg_ran/WG1_RL1/TSGR1_109-e/Docs/R1-2204516.zip R1-2204516.docx> [retrieved on 20220429]
- MODERATOR (ZTE): "Summary of AI 8.4.3 for HARQ for NTN", 3GPP DRAFT; R1-2106013, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210510 - 20210527, 19 May 2021 (2021-05-19), Mobile Competence Centre ; 650, route des Lucioles ; F-06921 Sophia-Antipolis Cedex ; France , XP052012454

## Description

### FIELD

The subject matter disclosed herein generally relates to wireless communications, and more particularly relates to methods and apparatuses for NTN (Non-Terrestrial Network) IoT (Internet of Things) HARQ (Hybrid Automatic Repeat request) enabling and disabling with DCI indication.

### BACKGROUND

The following abbreviations are herewith defined, at least some of which are referred to within the following description: New Radio (NR), Very Large Scale Integration (VLSI), Random Access Memory (RAM), Read-Only Memory (ROM), Erasable Programmable Read-Only Memory (EPROM or Flash Memory), Compact Disc Read-Only Memory (CD-ROM), Local Area Network (LAN), Wide Area Network (WAN), User Equipment (UE), Evolved Node B (eNB), Next Generation Node B (gNB), Uplink (UL), Downlink (DL), Central Processing Unit (CPU), Graphics Processing Unit (GPU), Field Programmable Gate Array (FPGA), Orthogonal Frequency Division Multiplexing (OFDM), Radio Resource Control (RRC), User Entity/Equipment (Mobile Terminal), Transmitter (TX), Receiver (RX), Non-Terrestrial Network (NTN), Internet of Things (IoT), Narrow Band Internet of Things (NBIoT or NB-IoT), Transport Block (TB), Physical Uplink Control Channel (PUCCH), Physical Uplink Shared Channel (PUSCH), Physical Downlink Shared Channel (PDSCH), acknowledgement (ACK), negative acknowledgement (NACK), Automatic Repeat request (ARQ), Hybrid Automatic Repeat request (HARQ), Radio Link Control (RLC), machine-type communication (MTC), enhanced MTC (eMTC), Downlink Control Information (DCI), NBIoT Physical Downlink Shared Channel (NPDSCH), (PRB), transport block size (TBS), (QPSK), modulation and coding scheme (MCS), transport block size (TBS), Quadrature Amplitude Modulation (QAM).

For a downlink data transmission process, the data signals are transmitted in unit of transport block (TB). One TB is transmitted in one subframe. Afterwards, a feedback (ACK or NACK) of the data signals is transmitted in an uplink feedback channel (e.g. PUCCH or PUSCH) to indicate whether the corresponding data signals are correctly received (i.e. ACK) or not (i.e. NACK) at the UE side. Each downlink data transmission process is associated with a process number. The feedback of the data signal is associated with the process number so that the base unit (e.g. eNB) knows with which TB (or with which subframe) the feedback is associated. The process number may also be referred to as HARQ process number.

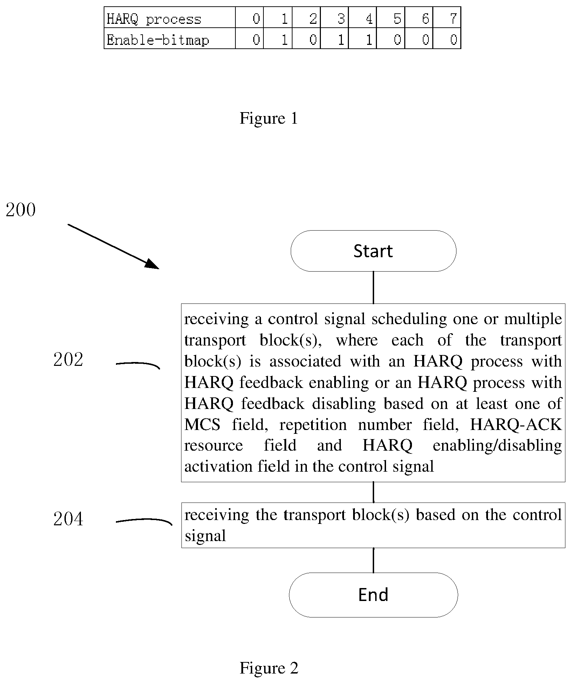

Disabling of the HARQ feedback has been supported in NR NTN. In particular, enabling and disabling of HARQ feedback for downlink transmission (e.g. PDSCH transmission) can be at least configurable per HARQ process via UE specific RRC signalling. For example, UE can be configured by RRC parameter to enable or disable the HARQ feedback per HARQ process (i.e. per HARQ process number) via bitmap manner. As shown in Figure 1, suppose that there are 8 HARQ processes (e.g. with HARQ process numbers #0 to #7), a bitmap with 8 bits can indicate HARQ feedback disabling or enabling of the 8 HARQ processes. For example, 0 indicates HARQ feedback disabling and 1 indicates HARQ feedback enabling.

When HARQ feedback disabling is configured for an HARQ process number (or for an HARQ process), no explicit UL feedback for DL transmission acknowledges a successful transmission of a TB associated with an HARQ process having the HARQ process number. It means that the HARQ process number can be reused for a new DL transmission without waiting for the HARQ feedback. This can avoid HARQ stalling and consequently avoid throughput degradation. Correspondingly, retransmission at RLC layer (i.e. RLC ARQ) may be required to meet reliability requirements. Typically, ARQ re-transmissions in RLC layer can have high latency, which might be acceptable to IoT services (e.g. eMTC and NBIoT) since IoT services are generally delay tolerant.

In NR NTN, for ensuring the efficiency and reliability of transmission carrying some critical signaling, e.g., RRC configuration, at least one HARQ process with feedback enabling should be kept. For NBIoT with single HARQ process, if the NR NTN HARQ enabling or disabling per HARQ process configuration by RRC parameter is reused, it is hard to guarantee at least one HARQ process with feedback enabling, because RRC reconfiguration would cause large signaling overhead.

This invention targets solutions for NTN IoT HARQ enabling and disabling.

Moderator (Lenovo), "Feature lead summary #3 on disabling of HARQ feedback for IoT NTN", R1-2205555, 3GPP TSG RAN WG1 Meeting #109, e-Meeting, May 9th - May 20th, 2022, provides the proposals and summary of discussions from each company concerning IoT-NTN performance enhancements, including in particular disabling of HARQ feedback to mitigate impact of HARQ stalling on UE data rates.

US2022109529A1 discloses methods and apparatuses for hybrid automatic repeat request acknowledgment (HARQ-ACK) information disabling in communication systems.

NEC, "Disabling of HARQ feedback for IoT NTN", R1-2203937, 3GPP TSG RAN WG1 #109-e, e-Meeting, May 9th - 20th, 2022, discuss the potential approaches to disable the HARQ feedback for IoT NTN.

### BRIEF SUMMARY

The invention is defined by the appended independent claims.

A user equipment, UE, for wireless communication is provided according to the appended independent claim 1.

A method performed by a user equipment, UE, is provided according to the appended independent claim 2.A base unit for wireless communication is provided according to the appended independent claim 3.

A method performed by a base unit is provided according to the appended independent claim 4.

A processor for a user equipment, UE, is provided according to the appended independent claim 5.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments, and are not therefore to be considered to be limiting of scope, the embodiments will be described and explained with additional specificity and detail through the use of the accompanying drawings, in which:
Figure 1 illustrates NR NTN HARQ feedback disabling indication;
Figure 2 is a schematic flow chart diagram illustrating an embodiment of a method;
Figure 3 is a schematic flow chart diagram illustrating another embodiment of a method; and
Figure 4 is a schematic block diagram illustrating apparatuses according to one embodiment.

### DETAILED DESCRIPTION

As will be appreciated by one skilled in the art that certain aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may generally all be referred to herein as a "circuit", "module" or "system". Furthermore, embodiments may take the form of a program product embodied in one or more computer readable storage devices storing machine-readable code, computer readable code, and/or program code, referred to hereafter as "code". The storage devices may be tangible, non-transitory, and/or non-transmission. The storage devices may not embody signals. In a certain embodiment, the storage devices only employ signals for accessing code.

Certain functional units described in this specification may be labeled as "modules", in order to more particularly emphasize their independent implementation. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but, may include disparate instructions stored in different locations which, when joined logically together, include the module and achieve the stated purpose for the module.

Indeed, a module of code may contain a single instruction, or many instructions, and may even be distributed over several different code segments, among different programs, and across several memory devices. Similarly, operational data may be identified and illustrated herein within modules and may be embodied in any suitable form and organized within any suitable type of data structure. This operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing code. The storage device may be, for example, but need not necessarily be, an electronic, magnetic, optical, electromagnetic, infrared, holographic, micromechanical, or semiconductor system, apparatus, or device, or any suitable combination of the foregoing.

A non-exhaustive list of more specific examples of the storage device would include the following: an electrical connection having one or more wires, a portable computer diskette, a hard disk, random access memory (RAM), read-only memory (ROM), erasable programmable read-only memory (EPROM or Flash Memory), portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Code for carrying out operations for embodiments may include any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may be executed entirely on the user's computer, partly on the user's computer, as a stand-alone software package, partly on the user's computer and partly on a remote computer or entirely on the remote computer or server. In the very last scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment", "an embodiment", or similar language means that a particular feature, structure, or characteristic described in connection with the embodiment is included in at least one embodiment. Thus, appearances of the phrases "in one embodiment", "in an embodiment", and similar language throughout this specification may, but do not necessarily, all refer to the same embodiment, but mean "one or more but not all embodiments" unless expressly specified otherwise. The terms "including", "comprising", "having", and variations thereof mean "including but are not limited to", unless otherwise expressly specified. An enumerated listing of items does not imply that any or all of the items are mutually exclusive, otherwise unless expressly specified. The terms "a", "an", and "the" also refer to "one or more" unless otherwise expressly specified.

Furthermore, described features, structures, or characteristics of various embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid any obscuring of aspects of an embodiment.

Aspects of different embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general purpose computer, special purpose computer, or other programmable data processing apparatus to produce a machine, such that the instructions, which are executed via the processor of the computer or other programmable data processing apparatus, create means for implementing the functions specified in the schematic flowchart diagrams and/or schematic block diagrams for the block or blocks.

The code may also be stored in a storage device that can direct a computer, other programmable data processing apparatus, or other devices, to function in a particular manner, such that the instructions stored in the storage device produce an article of manufacture including instructions which implement the function specified in the schematic flowchart diagrams and/or schematic block diagrams block or blocks.

The code may also be loaded onto a computer, other programmable data processing apparatus, or other devices, to cause a series of operational steps to be performed on the computer, other programmable apparatus or other devices to produce a computer implemented process such that the code executed on the computer or other programmable apparatus provides processes for implementing the functions specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that in some alternative implementations, the functions noted in the block may occur out of the order noted in the Figures. For example, two blocks shown in succession may substantially be executed concurrently, or the blocks may sometimes be executed in the reverse order, depending upon the functionality involved. Other steps and methods may be conceived that are equivalent in function, logic, or effect to one or more blocks, or portions thereof, to the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each Figure may refer to elements of proceeding figures. Like numbers refer to like elements in all figures, including alternate embodiments of like elements.

As described in the background part, if enabling or disabling of HARQ feedback for downlink transmission (e.g. PDSCH transmission) can only be configured by RRC parameter, frequent RRC reconfiguration would cause large signaling overhead. This disclosure proposes dynamic enabling or disabling of HARQ feedback for downlink transmission by the DCI (e.g. DCI format N1) scheduling the downlink transmission.

Before describing the detailed embodiments, a brief introduction of the downlink transmission of coded data (e.g. from base unit (e.g. gNB or eNB) to remote unit (e.g. UE)) is described. In particular, the number of resource unit (N_{SF}), the number of repetitions (N_{Rep}) (referred to as "repetition number" hereinafter) and the subcarriers to be used in time and frequency domain for the NPDSCH transmission are determined as follows:

Table 1 indicates the number of resource units (N_{SF}) being determined by resource assignment (*I_{SF}*)*.* The resource assignment (*I_{SF}*) is indicated with 3 bits by the corresponding control signal (e.g., DCI format N1). The resource unit for NPDSCH is 1ms for time domain and 1 PRB (12 subcarriers) in frequency domain.

**Table 1**

| I_{SF} | N_{SF} |
|---|---|
| 0 | 1 |
| 1 | 2 |
| 2 | 3 |
| 3 | 4 |
| 4 | 5 |
| 5 | 6 |
| 6 | 8 |
| 7 | 10 |

The subcarriers to be used for NPDSCH are a total of 12 subcarriers (each subcarrier is 15KHz).

The coded data is transmitted with a transport block size (TBS), and transmitted by using a modulation type (may also be referred to as modulation scheme) such as QPSK. The modulation type is associated with a modulation order (*Qₘ*)*.* For example, the modulation order (*Qₘ*) of QPSK is 2. The modulation order (*Qₘ*) represents the modulation type.

TBS is determined by TBS index (*I_{TBS}*) and the resource assignment (*I_{SF}*)*.* TBS index (*I_{TBS}*) is determined by MCS (modulation and coding scheme) index (*I_{MCS}*)*.* When QPSK (*Qₘ* =2) is assumed as the modulation type, *I_{TBS} = I_{MCS}.* The MCS index (*I_{MCS}*) is indicated with 4 bits (e.g. MCS field) contained in the corresponding control signal (e.g. DCI format N1).

Table 2 indicates the transport block size (TBS) table in NB-IoT Release 16.

**Table 2**

| *I_{TBS}* | *I_{SF}* | | | | | | | |
|---|---|---|---|---|---|---|---|---|
| | **0** | **1** | **2** | **3** | **4** | **5** | **6** | **7** |
| 0 | 16 | 32 | 56 | 88 | 120 | 152 | 208 | 256 |
| 1 | 24 | 56 | 88 | 144 | 176 | 208 | 256 | 344 |
| 2 | 32 | 72 | 144 | 176 | 208 | 256 | 328 | 424 |
| 3 | 40 | 104 | 176 | 208 | 256 | 328 | 440 | 568 |
| 4 | 56 | 120 | 208 | 256 | 328 | 408 | 552 | 680 |
| 5 | 72 | 144 | 224 | 328 | 424 | 504 | 680 | 872 |
| 6 | 88 | 176 | 256 | 392 | 504 | 600 | 808 | 1032 |
| 7 | 104 | 224 | 328 | 472 | 584 | 680 | 968 | 1224 |
| 8 | 120 | 256 | 392 | 536 | 680 | 808 | 1096 | 1352 |
| 9 | 136 | 296 | 456 | 616 | 776 | 936 | 1256 | 1544 |
| 10 | 144 | 328 | 504 | 680 | 872 | 1032 | 1384 | 1736 |
| 11 | 176 | 376 | 584 | 776 | 1000 | 1192 | 1608 | 2024 |
| 12 | 208 | 440 | 680 | 904 | 1128 | 1352 | 1800 | 2280 |
| 13 | 224 | 488 | 744 | 1032 | 1256 | 1544 | 2024 | 2536 |

In Table 2, *I_{TBS}* ranges from 0 to 13. In particular, *I_{TBS}* ranges from 0 to 13 for standalone deployment or guard band deployment; and *I_{TBS}* ranges from 0 to 10 for in-band deployment.

The coded data may be configured to be transmitted for a number of times by the repetition number *(N_{Rep}*)*.* Table 3 indicates the repetition number (*N_{Rep}*) being determined by repetition number index (*I_{Rep}*)*.* The repetition number index (*I_{Rep}*) is indicated with 4 bits (e.g. repetition field) contained in the corresponding control signal (e.g. DCI format N1).

**Table 3**

| I_{Rep} | N_{Rep} |
|---|---|
| 0 | 1 |
| 1 | 2 |
| 2 | 4 |
| 3 | 8 |
| 4 | 16 |
| 5 | 32 |
| 6 | 64 |
| 7 | 128 |
| 8 | 192 |
| 9 | 256 |
| 10 | 384 |
| 11 | 512 |
| 12 | 768 |
| 13 | 1024 |
| 14 | 1536 |
| 15 | 2048 |

According to a first embodiment, the enabling or disabling of the HARQ feedback for downlink transmission is indicated by existing field(s) contained in the DCI (e.g. DCI format N1) scheduling the downlink transmission.

In a first sub-embodiment of the first embodiment, suppose only the modulation type QPSK (i.e. *Qₘ* =2) is supported (e.g. 16QAM is not configured), i.e. *I_{TBS} = I_{MCS},* the enabling or disabling of the HARQ feedback for downlink transmission is indicated by the MCS field of the DCI. In particular, the enabling or disabling of the HARQ feedback for downlink transmission depends on the value of the MCS field.

As mentioned earlier, the MCS field has 4 bits. On the other hand, the MCS index (*I_{MCS}*) used to determine TBS index (*I_{TBS}*) ranges from 0 to 13 (i.e. from '0000' to '1101'). At least the value '1110' of the MCS field is not used.

Table 4 shows the first sub-embodiment of the first embodiment.

**Table 4**

| DCI field | HARQ enabling | HARQ disabling |
|---|---|---|
| Modulation and coding scheme (MCS): 4 bits | The values ranging from '0000' to '1101' indicate HARQ enabling, and indicate the MCS index | The value '1110' indicates HARQ disabling |
| HARQ-ACK resource: 4 bits | The values ranging from '0000' to '1111' indicate the HARQ-ACK feedback resource | The values ranging from '0000' to '1101' indicate the MCS index |

According to the first sub-embodiment of the first embodiment, when the MCS field indicates any of values ranging from '0000' to '1101', enabling of the HARQ feedback for downlink transmission is indicated. Any of the values ranging from '0000' to '1101' of the MCS field also indicates the MCS index (*I_{MCS}*)*.* The MCS index (*I_{MCS}*) indicates modulation type (i.e. QPSK in the first sub-embodiment of the first embodiment) and the TBS index (*I_{TBS}*) (i.e. *I_{TBS} = I_{MCS}* in the first sub-embodiment of the first embodiment). In addition, the TBS index (*I_{TBS}*) and the resource assignment (*I_{SF}*) indicate the transport block size (TBS) (see Table 2). In particular, *I_{TBS}* ranges from 0 (i.e. '0000') to 13 (i.e. '1101') for standalone deployment or guard band deployment; and *I_{TBS}* ranges from 0 (i.e. '0000') to 10 (i.e. '1010') for in-band deployment. As shown in Table 4, when the MCS field indicates any of values ranging from '0000' to '1101', the 'HARQ-ACK resource' field (which has 4 bits) indicates a value ranging from '0000' to '1111', which indicates the HARQ-ACK feedback resource information (e.g. subcarrier spacing for feedback channel and/or HARQ-ACK scheduling delay).

When the MCS field indicates value '1110', disabling of the HARQ feedback for downlink transmission is indicated. In this condition, the MCS field functions as HARQ disabling indicator. Since disabling of the HARQ feedback for downlink transmission is indicated, it is unnecessary to indicate the HARQ-ACK feedback resource information. So, the 'HARQ-ACK resource' field can be reused to indicate the MCS index (*I_{MCS}*)*.* As shown in Table 4, when the MCS field indicates the value '1110', the 'HARQ-ACK resource' field indicates a value of any of '0000' to '1101'. That is, it functions as the MCS index corresponding disabling of the HARQ feedback for downlink transmission. Any of the values ranging from '0000' to '1101' of the MCS field indicates the MCS index (*I_{MCS}*)*.* The MCS index (*I_{MCS}*) indicates modulation type (i.e. QPSK in the first sub-embodiment of the first embodiment) and the TBS index (*I_{TBS}*)*.*

The first sub-embodiment of the first embodiment applies to only the modulation type QPSK (i.e. *Qₘ* =2) being supported (e.g. 16QAM is not configured).

According to the first sub-embodiment of the first embodiment, the MCS field and the 'HARQ-ACK resource' field of the scheduling DCI (e.g. DCI format N1) are jointly coded to indicate enabling or disabling of the HARQ feedback for downlink transmission.

When both the modulation type QPSK (i.e. *Qₘ* =2) and the modulation type 16QAM (i.e. *Qₘ =* 4) are supported, the value '1111' of the MCS field is used to the modulation type 16QAM (i.e. *Qₘ =* 4), as shown in Table 5.

**Table 5**

| DCI field | 16QAM is not configured by higher layer | 16QAM is configured by higher layer |
|---|---|---|
| Modulation and coding scheme (MCS) : 4 bits | The values ranging from '0000' to '1101' indicate the modulation type QPSK and the MCS index for QPSK | The value '1111' indicates the modulation type 16QAM |
| Repetition number: 4 bits | The values indicate the repetition number | Assuming repetition number of 1, the values indicate the MCS index for 16QAM |
| | | The field functions as the MCS index for 16QAM |

When 16QAM is supported, the transport block size (TBS) table (as shown in above Table 2) is extended as the following Table 6.

**Table 6**

| *I*_{TBS} | *I*_{SF} | | | | | | | |
|---|---|---|---|---|---|---|---|---|
| | **0** | **1** | **2** | **3** | **4** | **5** | **6** | **7** |
| 0 | 16 | 32 | 56 | 88 | 120 | 152 | 208 | 256 |
| 1 | 24 | 56 | 88 | 144 | 176 | 208 | 256 | 344 |
| 2 | 32 | 72 | 144 | 176 | 208 | 256 | 328 | 424 |
| 3 | 40 | 104 | 176 | 208 | 256 | 328 | 440 | 568 |
| 4 | 56 | 120 | 208 | 256 | 328 | 408 | 552 | 680 |
| 5 | 72 | 144 | 224 | 328 | 424 | 504 | 680 | 872 |
| 6 | 88 | 176 | 256 | 392 | 504 | 600 | 808 | 1032 |
| 7 | 104 | 224 | 328 | 472 | 584 | 680 | 968 | 1224 |
| 8 | 120 | 256 | 392 | 536 | 680 | 808 | 1096 | 1352 |
| 9 | 136 | 296 | 456 | 616 | 776 | 936 | 1256 | 1544 |
| 10 | 144 | 328 | 504 | 680 | 872 | 1032 | 1384 | 1736 |
| 11 | 176 | 376 | 584 | 776 | 1000 | 1192 | 1608 | 2024 |
| 12 | 208 | 440 | 680 | 904 | 1128 | 1352 | 1800 | 2280 |
| 13 | 224 | 488 | 744 | 1032 | 1256 | 1544 | 2024 | 2536 |
| 14 | 256 | 552 | 840 | 1128 | 1416 | 1736 | 2280 | 2856 |
| 15 | 280 | 600 | 904 | 1224 | 1544 | 1800 | 2472 | 3112 |
| 16 | 296 | 632 | 968 | 1288 | 1608 | 1928 | 2600 | 3240 |
| 17 | 336 | 696 | 1064 | 1416 | 1800 | 2152 | 2856 | 3624 |
| 18 | 376 | 776 | 1160 | 1544 | 1992 | 2344 | 3112 | 4008 |
| 19 | 408 | 840 | 1288 | 1736 | 2152 | 2600 | 3496 | 4264 |
| 20 | 440 | 904 | 1384 | 1864 | 2344 | 2792 | 3752 | 4584 |
| 21 | 488 | 1000 | 1480 | 1992 | 2472 | 2984 | 4008 | 4968 |

In Table 6, *I_{TBS}* ranges from 0 to 21. In particular, for standalone deployment or guard band deployment, *I_{TBS}* ranges from 0 to 13 (i.e. 14 values) for modulation type QPSK and ranges from 14 to 21 (i.e. 8 values) for modulation type 16QAM. For in-band deployment, *I_{TBS}* ranges from 0 to 10 (i.e. 11 values) for modulation type QPSK, and ranges from 11 to 17 (i.e. 7 values) for modulation type 16QAM. It can be seen that, for modulation type QPSK, it is enough that the MCS index (for QPCK) has 4 bits (for 14 values for standalone or guardband deployment or 13 values for inband deployment) to determine *I_{TBS},* and for modulation type 16QAM, it is enough that the MCS index (for 16QAM) has 3 bits (for 8 values for standalone or guardband deployment or 7 values for inband deployment) to determine *I_{TBS}.*

If QPSK is indicated, i.e. the MCS field indicates any value of '0000' to '1101' (i.e. MCS index (*I_{MCS}*)) (for standalone or guard band deployment, any value of '0000' to '1101', and for in-band deployment, any value of '0000' to '1010'), the TBS index (*I_{TBS}*) is equal to the MCS index (*I_{MCS}*)*.* So, the TBS index (*I_{TBS}*) ranges from '0000' to '1101' (i.e. 0 to 13) for standalone or guard band deployment, and ranges from '0000' to '1010' (i.e. 0 to 10) for in-band deployment.

If 16QAM is indicated, i.e. the MCS field indicates the value '1111', the MCS index (*I_{MCS}*) for 16QAM is indicated by the repetition number field by any value of '0000' to '0111' (for standalone or guard band deployment, any value of '0000' to '0111', and for in-band deployment, any value of '0000' to '0110'. the TBS index (*I_{TBS}*) is equal to the MCS index (*I_{MCS}*) plus 14 for standalone or guard band deployment, and is equal to the MCS index (*I_{MCS}*) plus 11 for in-band deployment. So, the TBS index (*I_{TBS}*) ranges from 14 to 21 for standalone or guard band deployment, and ranges from 11 to 17 for in-band deployment.

In a second sub-embodiment of the first embodiment, suppose both the modulation type QPSK (i.e. *Qₘ* =2) and the modulation type 16QAM (i.e. *Qₘ =* 4) are supported, the enabling or disabling of the HARQ feedback for downlink transmission for the modulation type 16QAM is indicated by the repetition number field of the DCI. In particular, the enabling or disabling of the HARQ feedback for downlink transmission for the modulation type 16QAM depends on the value of the repetition number field.

Table 7 shows the second sub-embodiment of the first embodiment.

**Table 7**

| DCI field | 16QAM | | QPSK | |
|---|---|---|---|---|
| | HARQ enabling | HARQ disabling | HARQ enabling | HARQ disabling |
| Modulation and coding scheme (MCS) : 4 bits | The value '1111' indicates 16QAM. | | The values ranging from '0000' to '1101' indicate HARQ enabling, and indicate QPSK and the MCS index for QPSK | The value '1110' indicates HARQ disabling, it functions as HARQ disabling indictor for QPSK |
| | It functions as 16QAM indicator. | | | |
| Repetition number: 4 bits | The values ranging from '0000' to '0111' indicate HARQ enabling and the MCS index for 16QAM. | Solution AA: any of unused value (e.g. '1111') indicates HARQ disabling, it functions as the HARQ disabling indicator for 16QAM. | The values ranging from '0000' to '1111' indicate the repetition number | The values ranging from '0000' to '1111' indicate the repetition number |
| | It functions as the MCS index for 16QAM and HARQ enabling. | | | |
| | | or | | |
| | | Solution BB: The values ranging from '1000' to '1111' indicate HARQ disabling and the MCS index for 16QAM | | |
| HARQ-ACK resource: 4 bits | The values ranging from '0000' to '1111' indicate the HARQ-ACK resource | Solution AA: The values ranging from '0000' to '0111' indicate the MCS index for 16QAM. | The values ranging from '0000' to '1111' indicate the HARQ-ACK feedback resource | The values ranging from '0000' to '1101' indicate the MCS index for QPSK. |
| | | It functions as the MCS index for 16QAM for HARQ disabling. | | It functions as the MCS index for QPSK for HARQ disabling |
| | | Solution BB: unused, up to eNB implementation, and UE shall not receive the field. | | |

The right part of Table 7 is substantially the same as Table 5, for the modulation type QPSK. That is, when the MCS field indicates any of values ranging from '0000' to '1101', enabling of the HARQ feedback for downlink transmission is indicated; and the 'HARQ-ACK resource' field indicates a value ranging from '0000' to '1111', which indicates the HARQ-ACK feedback resource information. When the MCS field indicates value '1110', disabling of the HARQ feedback for downlink transmission is indicated; and the 'HARQ-ACK resource' field can be reused to indicate the MCS index (*I_{MCS}*) for QPSK. In addition, the 'repetition number' field indicates a value of any of '0000' to '1111', indicating the repetition number.

The left part of Table 7 is for the modulation type 16QAM. Similar to Table 5, the value '1111' of the MCS field is used to indicate the modulation type 16QAM (i.e. *Qₘ =* 4). In this condition, the enabling or disabling of the HARQ feedback for downlink transmission for the modulation type 16QAM is indicated by the repetition number field of the DCI.

In particular, the value of the repetition number field being any of '0000' to '0111' indicates HARQ enabling, and indicates the MCS index for 16QAM. Incidentally, for standalone or guard band deployment, the MCS index for 16QAM ranges from '0000' to '0111'; and for inband deployment, the MCS index for 16QAM ranges from '0000' to '0110'. If the repetition number field indicates a value of any of '0000' to '0111', the 'HARQ-ACK resource' field indicates a value ranging from '0000' to '1111', which indicates the HARQ-ACK feedback resource information (e.g. subcarrier spacing for feedback channel and/or HARQ-ACK scheduling delay).

There are two different solutions to indicate HARQ disabling by the repetition number field.

Solution AA: If the value of repetition number field is a predetermined one of unused states (e.g. any of '1000' to '1111'), e.g. value of '1111', disabling of the HARQ feedback for downlink transmission is indicated. In this condition, the 'HARQ-ACK resource' field indicates the MCS index for 16QAM, e.g. a value ranging from '0000' to '0111' (for standalone or guard band deployment, from '0000' to '0111'; and for inband deployment, from '0000' to '0110').

Solution BB: If the value of repetition number field belongs to unused states (e.g. any of '1000' to '1111'), disabling of the HARQ feedback for downlink transmission is indicated. In addition, the value of repetition number field indicating disabling of the HARQ feedback for downlink transmission also indicates the MCS index for 16QAM. It means that the values '1000' to '1111' correspond to the MCS index for 16QAM '0000' to '0111', respectively. In this condition, the 'HARQ-ACK resource' field is unused.

In Solution AA or BB, the repetition number field functions as HARQ disabling indicator.

The second sub-embodiment of the first embodiment applies to both the modulation type QPSK (i.e. *Qₘ* =2) and the modulation type 16QAM (i.e. *Qₘ =* 4) being supported.

According to the second sub-embodiment of the first embodiment, the MCS field, the repetition number field and the 'HARQ-ACK resource' field of the scheduling DCI (e.g. DCI format N1) are jointly coded to indicate enabling or disabling of the HARQ feedback for downlink transmission.

According to the first embodiment, the existing DCI fields are reused (e.g. jointly coded) to indicate the enabling or disabling of the HARQ feedback for downlink transmission. The size of the DCI does not increase.

When the enabling or disabling of the HARQ feedback for downlink transmission is indicated by existing field(s) contained in the DCI according to the first embodiment, the enabling or disabling of the HARQ feedback only applies to the TBs scheduled by the DCI.

In NB-IoT, two (2) HARQ processes are supported. It means that one or two HARQ processes can be configured.

If one HARQ process is configured (i.e. the DCI schedules one TB associated with the one HARQ process), the enabling or disabling of the HARQ feedback by existing field(s) contained in the DCI according to the first embodiment applies to the one HARQ process associated with the one TB. That is, the existing field(s) contained in the DCI according to the first embodiment indicates the HARQ feedback enabling or disabling of the one HARQ process associated with the one TB.

If two HARQ processes are configured while multiple TB scheduling is not configured (i.e. a DCI can only schedule one TB associated with one of the two configured HARQ process), the enabling or disabling of the HARQ feedback by existing field(s) contained in the DCI according to the first embodiment applies to the HARQ process associated with the one TB. That is, the existing field(s) contained in the DCI according to the first embodiment indicates the HARQ feedback enabling or disabling of the HARQ process (one of the two configured two HARQ processes) associated with the one TB.

If multiple TB scheduling is configured (i.e. a DCI can schedule multiple TBs (e.g. two TBs: a first TB and a second TB) each of which is associated with a different HARQ process (e.g. one of a first HARQ process and a second HARQ process)), the enabling or disabling of the HARQ feedback by existing field(s) contained in the DCI according to the first embodiment applies to the first HARQ process and the second HARQ process simultaneously. It means that the HARQ feedback of the first HARQ process associated with thefirst TB and the HARQ feedback of the second HARQ process associated with the second TB are indicated as both enabling or both disabling by existing field(s) contained in the DCI according to the first embodiment.

According to a second embodiment, the enabling or disabling of the HARQ feedback for downlink transmission is indicated by a newly introduced field (e.g. a newly introduced 1-bit field) in the DCI (e.g. DCI format N1) scheduling the downlink transmission.

In a first sub-embodiment of the second embodiment, a newly introduced 1-bit field (e.g. HARQ enabling/disabling activation field) indicates the enabling or disabling of the HARQ feedback for downlink transmission.

As mentioned earlier, in NBIoT, two (2) HARQ processes are supported. It means that one or two HARQ processes can be configured.

If one HARQ process is configured (i.e. the DCI schedules one TB associated with the one HARQ process), the newly introduced 1-bit field (e.g. HARQ enabling/disabling activation field) indicates the HARQ feedback enabling or disabling of the one HARQ process associated with the one TB.

If two HARQ processes are configured while multiple TB scheduling is not configured (i.e. a DCI can only schedule one TB associated with one of the two configured HARQ process), the newly introduced 1-bit field (e.g. HARQ enabling/disabling activation field) indicates the HARQ feedback enabling or disabling of the HARQ process (one of the two configured two HARQ processes) associated with the one TB.

If multiple TB scheduling is configured (i.e. a DCI can schedule multiple TBs (e.g. 2 TBs: a first TB and a second TB) each of which is associated with a different HARQ process (e.g. one of a first HARQ process and a second HARQ process)), the newly introduced 1-bit field (e.g. HARQ enabling/disabling activation field) may indicate the enabling or disabling of the HARQ feedback of (1) the first HARQ process, or (2) the second HARQ process, or (3) the first HARQ process and the second HARQ process simultaneously. In addition, if only the enabling or disabling of the HARQ feedback of one of the first HARQ process and the second HARQ process is indicated, the enabling or disabling of the HARQ feedback of the other of the first HARQ process and the second HARQ process may be by default (e.g. enabling or disabling) or configured by higher layer parameter. For example, if the newly introduced 1-bit field (e.g. HARQ enabling/disabling activation field) indicates the enabling or disabling of the HARQ feedback of the first HARQ process, the enabling or disabling of the HARQ feedback of the second HARQ process may be by default (e.g. enabling or disabling) or configured by higher layer parameter.

In a second sub-embodiment of the second embodiment, the enabling or disabling of the HARQ feedback for downlink transmission can be configured by RRC signaling (maybe referred to as RRC configuration), and activated or deactivated by a newly introduced 1-bit field (e.g. HARQ enabling/disabling activation field) of the scheduling DCI.

In particular, if two HARQ processes are configured (while multiple TB scheduling is not configured) or multiple TB scheduling is configured, the enabling or disabling of the HARQ feedback for downlink transmission (e.g. of a first HARQ process and a second HARQ process) can be configured by RRC signaling via bitmap manner. It means that each of the HARQ feedback of the first HARQ process and the HARQ feedback of the second HARQ process can be configured as enabling or disabling. Alternatively, the enabling or disabling of the HARQ feedback for downlink transmission (e.g. of a first HARQ process and a second HARQ process) can be configured by a 1-bit RRC signalling. It means that the HARQ feedback of the first HARQ process and the HARQ feedback of the second HARQ process can be configured by a 1-bit RRC signalling to both enabling or both disabling. Further alternatively, if the feature "the enabling or disabling of the HARQ feedback for downlink transmission" is supported, the HARQ feedback of the first HARQ process and/or the HARQ feedback of the second HARQ process can be predefined as enabling or disabling. In addition, the newly introduced 1-bit field (e.g. HARQ enabling/disabling activation field) of the scheduling DCI dynamically indicates (e.g. activate or deactivate) the enabling or disabling of the HARQ feedback for downlink transmission configured by RRC signaling or predefined.

If two HARQ processes (e.g. a first HARQ process and a second HARQ process) are configured (while multiple TB scheduling is not configured), the enabling or disabling of the HARQ feedback for downlink transmission (e.g. of a first HARQ process and a second HARQ process) can be configured by RRC signaling via bitmap manner or by a 1-bit RRC signalling or predefined. For example, the eNB configures the enabling or disabling of the HARQ feedback for downlink transmission by RRC signaling via a bitmap '10' for the first and the second HARQ processes, in which '1' stands for HARQ enabling, while '0' stands for HARQ disabling. That is, the bitmap '10' configures the HARQ feedback enabling of the first HARQ process and the HARQ feedback disabling of the second HARQ process. A first DCI schedules one TB, e.g. associated with the second HARQ process. The newly introduced 1-bit field (e.g. HARQ enabling/disabling activation field) of the first DCI indicates '1' (where '1' stands for 'activate' and '0' stands for 'deactivate'). It means that the enabling or disabling of the HARQ feedback of the second HARQ process configured by RRC signaling (i.e. the HARQ feedback disabling of the second HARQ process) is activated, that is, the HARQ feedback disabling of the second HARQ process (i.e. configured disabling + activated = disabling). For another example, a second DCI schedules one TB, e.g. associated with the first HARQ process. The newly introduced 1-bit field (e.g. HARQ enabling/disabling activation field) of the second DCI indicates '0'. It means that the enabling or disabling of the HARQ feedback for downlink transmission of the first HARQ process configured by RRC signaling (i.e. the HARQ feedback enabling for downlink transmission of the first HARQ process) is deactivated, that is, the HARQ feedback disabling for downlink transmission of the first HARQ process (i.e. configured enabling + deactivated = disabling). Incidentally, configured enabling + activated = enabling; and configured disabling + deactivated = enabling.

If multiple TB scheduling is configured (e.g. two TBs are scheduled, a first TB is associated with a first HARQ process and a second TB is associated with a second HARQ process), the enabling or disabling of the HARQ feedback for downlink transmission (e.g. of a first HARQ process and a second HARQ process) can be configured by RRC signaling via bitmap manner or by a 1-bit RRC signalling or predefined.

For one example, the enabling or disabling of the HARQ feedback for downlink transmission is configured by RRC signaling via a bitmap, e.g. the bitmap '10', for the first and the second HARQ processes. That is, the bitmap '10' configures the HARQ feedback enabling of the first HARQ process and the HARQ feedback disabling of the second HARQ process. A DCI schedules two TBs, where a first TB is associated with a first HARQ process and a second TB is associated with a second HARQ process. The newly introduced 1-bit field (e.g. HARQ enabling/disabling activation field) of the DCI indicates '0' or '1'. If '1' is indicated, it means that the enabling or disabling of the HARQ feedback of the first and second HARQ processes configured by RRC signaling (i.e. the HARQ feedback enabling of the first HARQ process, and the HARQ feedback disabling of the second HARQ process) is activated (i.e. confirmed). If '0' is indicated, the enabling or disabling of the HARQ feedback of the first and second HARQ processes configured by RRC signaling is deactivated (i.e. not confirmed), which may have three alternative explanations:
(1) the HARQ feedback disabling of both the first and second HARQ processes, i.e. the HARQ feedback disabling of the first HARQ process and the HARQ feedback disabling of the second HARQ process.
(2) the HARQ feedback enabling of both the first and second HARQ processes, i.e. the HARQ feedback enabling of the first HARQ process and the HARQ feedback enabling of the second HARQ process.
(3) the enabling or disabling of the HARQ feedback of the first and second HARQ processes is opposite to that configured by RRC signaling. That is, if the bitmap '10' configures the HARQ feedback of the first and the second HARQ processes (i.e. the HARQ feedback enabling of the first HARQ process and the HARQ feedback disabling of the second HARQ process), the value '0' of the newly introduced 1-bit field (e.g. HARQ enabling/disabling activation field) of the DCI indicates the HARQ feedback disabling (i.e. opposite to enabling) of the first HARQ process and the HARQ feedback enabling (i.e. opposite to disabling) of the second HARQ process.

For another example, the eNB configures the enabling or disabling of the HARQ feedback for downlink transmission by a 1-bit RRC signaling for the first and the second HARQ processes, or the enabling or disabling of the HARQ feedback for downlink transmission is predefined. For example, the 1-bit RRC signaling configures that both the HARQ feedback of the first HARQ process and the HARQ feedback of the second HARQ process as enabling, or both the HARQ feedback of the first HARQ process and the HARQ feedback of the second HARQ process are predefined as enabling. A DCI schedules two TBs, where a first TB is associated with a first HARQ process and a second TB is associated with a second HARQ process. The newly introduced 1-bit field (e.g. HARQ enabling/disabling activation field) of the DCI indicates '0' or '1'. If '1' is indicated, it means that the enabling or disabling of the HARQ feedback of the first and second HARQ processes configured by the 1-bit RRC signaling or predefined is activated (i.e. confirmed), i.e. the HARQ feedback enabling of the first HARQ process, and the HARQ feedback enabling of the second HARQ process. If '0' is indicated, the enabling or disabling of the HARQ feedback of the first and second HARQ processes configured by RRC signaling or predefined is deactivated (i.e. not confirmed), which may have three alternative explanations:
(1) only the HARQ feedback of the second HARQ process is deactivated (i.e. changed: e.g. enabling -> disabling), while the HARQ feedback of the first HARQ process does not change. It implies that the first HARQ process is a default process, the HARQ feedback enabling or disabling of which is predefined. That is, the newly introduced 1-bit field (e.g. HARQ enabling/disabling activation field) of the DCI does not change of the HARQ feedback enabling or disabling of the default process.
(2) only the HARQ feedback of the first HARQ process is deactivated (i.e. changed: e.g. enabling -> disabling), while the HARQ feedback of the second HARQ process does not change. It implies that the second HARQ process is the default process.
(3) the enabling or disabling of the HARQ feedback of the first and second HARQ processes is opposite to that configured by the 1-bit RRC signaling or predefined.

Figure 2 is a schematic flow chart diagram illustrating an embodiment of a method 200 according to the present application. In some embodiments, the method 200 is performed by an apparatus, such as a remote unit (UE). In certain embodiments, the method 200 may be performed by a processor executing program code, for example, a microcontroller, a microprocessor, a CPU, a GPU, an auxiliary processing unit, a FPGA, or the like.

The method 200 may comprise 202 receiving a control signal scheduling one or multiple transport block(s), where each of the transport block(s) is associated with an HARQ process with HARQ feedback enabling or an HARQ process with HARQ feedback disabling based on at least one of MCS field, repetition number field, HARQ-ACK resource field and HARQ enabling/disabling activation field in the control signal; and 204 receiving the transport block(s) based on the control signal.

In some embodiment, the control signal schedules one transport block, and the one transport block is associated with an HARQ process with HARQ feedback enabling or an HARQ process with HARQ feedback disabling based on the value of the MCS field. In particular, if the value of the MCS field indicates the one transport block is associated with an HARQ process with HARQ feedback enabling, the HARQ-ACK resource field indicates HARQ feedback resource information; and if the value of the MCS field indicates the one transport block is associated with an HARQ process with HARQ feedback disabling, the HARQ-ACK resource field indicates the MCS index for the one transport block.

In some embodiment, the control signal schedules one transport block, and the one transport block is associated with an HARQ process with HARQ feedback enabling or an HARQ process with HARQ feedback disabling based on the value of the repetition number field. In particular, if the value of the repetition number field indicates the one transport block is associated with an HARQ process with HARQ feedback enabling, the HARQ-ACK resource field indicates HARQ feedback resource information, and if the value of the repetition number field indicates the one transport block is associated with an HARQ process with HARQ feedback disabling, the repetition number field also functions as the MCS indication for 16QAM. Alternatively, if the value of the repetition number field indicates the one transport block is associated with an HARQ process with HARQ feedback enabling, the HARQ-ACK resource field indicates HARQ feedback resource information, and if the value of the repetition number field indicates the one transport block is associated with an HARQ process with HARQ feedback disabling, the HARQ-ACK resource field functions as the MCS indication for 16QAM.

In some embodiment, the method further comprises receiving a HARQ configuration, wherein the HARQ configuration configures HARQ feedback enabling or disabling of the HARQ process(es) associated with the transport block(s). In addition, the HARQ enabling/disabling activation field activates or deactivates the HARQ configuration. Alternatively, the control signal schedules a first transport block associated with a first HARQ process and a second transport block associated with a second HARQ process, and the HARQ enabling/disabling activation field only indicates the HARQ feedback enabling or disabling of one of the first HARQ process and the second HARQ process, and the HARQ feedback enabling or disabling of the other of the first HARQ process and the second HARQ process is predefined or configured by he HARQ configuration. Further alternatively, if the control signal schedules two transport blocks each of which is associated with one HARQ process, the HARQ enabling/disabling activation field deactivates HARQ feedback enabling or disabling of each HARQ process associated with one of the two transport blocks by one of: two HARQ processes are configured with HARQ feedback disabling; two HARQ processes are configured with HARQ feedback enabling; and the HARQ feedback enabling or disabling of each HARQ process is opposite with that configured by the HARQ configuration.

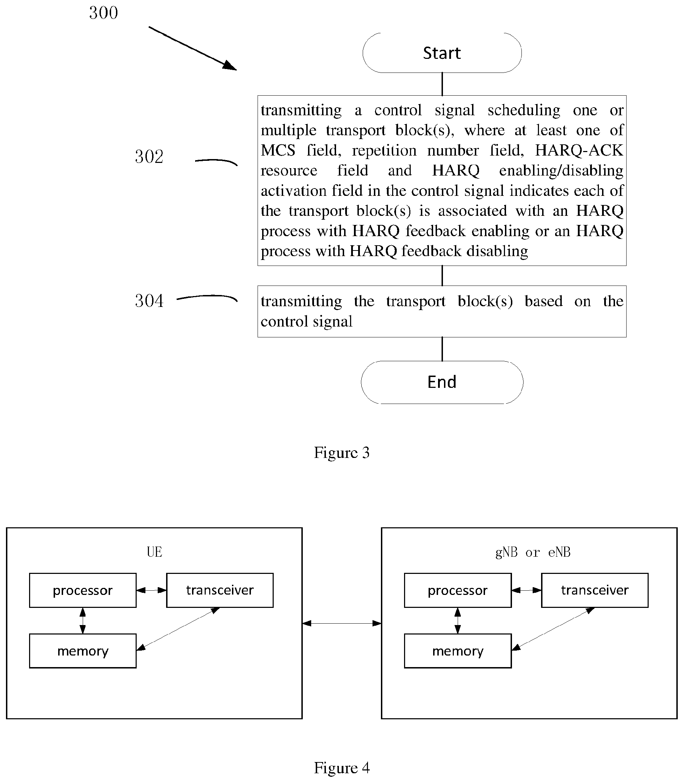

Figure 3 is a schematic flow chart diagram illustrating a further embodiment of a method 300 according to the present application. In some embodiments, the method 300 is performed by an apparatus, such as a base unit. In certain embodiments, the method 300 may be performed by a processor executing program code, for example, a microcontroller, a microprocessor, a CPU, a GPU, an auxiliary processing unit, a FPGA, or the like.

The method 300 may comprise 302 transmitting a control signal scheduling one or multiple transport block(s), where at least one of MCS field, repetition number field, HARQ-ACK resource field and HARQ enabling/disabling activation field in the control signal indicates each of the transport block(s) is associated with an HARQ process with HARQ feedback enabling or an HARQ process with HARQ feedback disabling; and 304 transmitting the transport block(s) based on the control signal.

In some embodiment, the control signal schedules one transport block, and the one transport block is associated with an HARQ process with HARQ feedback enabling or an HARQ process with HARQ feedback disabling based on the value of the MCS field. In particular, if the value of the MCS field indicates the one transport block is associated with an HARQ process with HARQ feedback enabling, the HARQ-ACK resource field indicates HARQ feedback resource information; and if the value of the MCS field indicates the one transport block is associated with an HARQ process with HARQ feedback disabling, the HARQ-ACK resource field indicates the MCS index for the one transport block.

In some embodiment, the control signal schedules one transport block, and the one transport block is associated with an HARQ process with HARQ feedback enabling or an HARQ process with HARQ feedback disabling based on the value of the repetition number field. In particular, if the value of the repetition number field indicates the one transport block is associated with an HARQ process with HARQ feedback enabling, the HARQ-ACK resource field indicates HARQ feedback resource information, and if the value of the repetition number field indicates the one transport block is associated with an HARQ process with HARQ feedback disabling, the repetition number field also functions as the MCS indication for 16QAM. Alternatively, if the value of the repetition number field indicates the one transport block is associated with an HARQ process with HARQ feedback enabling, the HARQ-ACK resource field indicates HARQ feedback resource information, and if the value of the repetition number field indicates the one transport block is associated with an HARQ process with HARQ feedback disabling, the HARQ-ACK resource field functions as the MCS indication for 16QAM.

In some embodiment, the method further comprises transmitting a HARQ configuration, wherein the HARQ configuration configures HARQ feedback enabling or disabling of the HARQ process(es) associated with the transport block(s). In addition, the HARQ enabling/disabling activation field activates or deactivates the HARQ configuration. Alternatively, the control signal schedules a first transport block associated with a first HARQ process and a second transport block associated with a second HARQ process, and the HARQ enabling/disabling activation field only indicates the HARQ feedback enabling or disabling of one of the first HARQ process and the second HARQ process, and the HARQ feedback enabling or disabling of the other of the first HARQ process and the second HARQ process is predefined or configured by he HARQ configuration. Further alternatively, if the control signal schedules two transport blocks each of which is associated with one HARQ process, the HARQ enabling/disabling activation field deactivates HARQ feedback enabling or disabling of each HARQ process associated with one of the two transport blocks by one of: two HARQ processes are configured with HARQ feedback disabling; two HARQ processes are configured with HARQ feedback enabling; and the HARQ feedback enabling or disabling of each HARQ process is opposite with that configured by the HARQ configuration.

Figure 4 is a schematic block diagram illustrating apparatuses according to one embodiment.

Referring to Figure 4, the UE (i.e. the remote unit) includes a processor, a memory, and a transceiver. The processor implements a function, a process, and/or a method which are proposed in Figure 2.

The UE comprises a processor; and a transceiver coupled to the processor, wherein the processor is configured to receive, via the transceiver, a control signal scheduling one or multiple transport block(s), where each of the transport block(s) is associated with a hybrid automatic repeat request (HARQ) process with HARQ feedback enabling or an HARQ process with HARQ feedback disabling based on at least one of MCS field, repetition number field, HARQ-ACK resource field and HARQ enabling/disabling activation field in the control signal; and receive, via the transceiver, the transport block(s) based on the control signal.

In some embodiment, the control signal schedules one transport block, and the one transport block is associated with an HARQ process with HARQ feedback enabling or an HARQ process with HARQ feedback disabling based on the value of the MCS field. In particular, if the value of the MCS field indicates the one transport block is associated with an HARQ process with HARQ feedback enabling, the HARQ-ACK resource field indicates HARQ feedback resource information; and if the value of the MCS field indicates the one transport block is associated with an HARQ process with HARQ feedback disabling, the HARQ-ACK resource field indicates the MCS index for the one transport block.

In some embodiment, the control signal schedules one transport block, and the one transport block is associated with an HARQ process with HARQ feedback enabling or an HARQ process with HARQ feedback disabling based on the value of the repetition number field. In particular, if the value of the repetition number field indicates the one transport block is associated with an HARQ process with HARQ feedback enabling, the HARQ-ACK resource field indicates HARQ feedback resource information, and if the value of the repetition number field indicates the one transport block is associated with an HARQ process with HARQ feedback disabling, the repetition number field also functions as the MCS indication for 16QAM. Alternatively, if the value of the repetition number field indicates the one transport block is associated with an HARQ process with HARQ feedback enabling, the HARQ-ACK resource field indicates HARQ feedback resource information, and if the value of the repetition number field indicates the one transport block is associated with an HARQ process with HARQ feedback disabling, the HARQ-ACK resource field functions as the MCS indication for 16QAM.

In some embodiment, the processor is further configured to receive, via the transceiver, a HARQ configuration, wherein the HARQ configuration configures HARQ feedback enabling or disabling of the HARQ process(es) associated with the transport block(s). In addition, the HARQ enabling/disabling activation field activates or deactivates the HARQ configuration. Alternatively, the control signal schedules a first transport block associated with a first HARQ process and a second transport block associated with a second HARQ process, and the HARQ enabling/disabling activation field only indicates the HARQ feedback enabling or disabling of one of the first HARQ process and the second HARQ process, and the HARQ feedback enabling or disabling of the other of the first HARQ process and the second HARQ process is predefined or configured by he HARQ configuration. Further alternatively, if the control signal schedules two transport blocks each of which is associated with one HARQ process, the HARQ enabling/disabling activation field deactivates HARQ feedback enabling or disabling of each HARQ process associated with one of the two transport blocks by one of: two HARQ processes are configured with HARQ feedback disabling; two HARQ processes are configured with HARQ feedback enabling; and the HARQ feedback enabling or disabling of each HARQ process is opposite with that configured by the HARQ configuration.

Referring to Figure 4, the gNB (i.e. base unit) includes a processor, a memory, and a transceiver. The processors implement a function, a process, and/or a method which are proposed in Figure 3.

The base unit comprises a processor; and a transceiver coupled to the processor, wherein the processor is configured to transmit, via the transceiver, a control signal scheduling one or multiple transport block(s), where at least one of MCS field, repetition number field, HARQ-ACK resource field and HARQ enabling/disabling activation field in the control signal indicates each of the transport block(s) is associated with an HARQ process with HARQ feedback enabling or an HARQ process with HARQ feedback disabling; and transmit, via the transceiver, the transport block(s) based on the control signal.

In some embodiment, the control signal schedules one transport block, and the one transport block is associated with an HARQ process with HARQ feedback enabling or an HARQ process with HARQ feedback disabling based on the value of the MCS field. In particular, if the value of the MCS field indicates the one transport block is associated with an HARQ process with HARQ feedback enabling, the HARQ-ACK resource field indicates HARQ feedback resource information; and if the value of the MCS field indicates the one transport block is associated with an HARQ process with HARQ feedback disabling, the HARQ-ACK resource field indicates the MCS index for the one transport block.

In some embodiment, the control signal schedules one transport block, and the one transport block is associated with an HARQ process with HARQ feedback enabling or an HARQ process with HARQ feedback disabling based on the value of the repetition number field. In particular, if the value of the repetition number field indicates the one transport block is associated with an HARQ process with HARQ feedback enabling, the HARQ-ACK resource field indicates HARQ feedback resource information, and if the value of the repetition number field indicates the one transport block is associated with an HARQ process with HARQ feedback disabling, the repetition number field also functions as the MCS indication for 16QAM. Alternatively, if the value of the repetition number field indicates the one transport block is associated with an HARQ process with HARQ feedback enabling, the HARQ-ACK resource field indicates HARQ feedback resource information, and if the value of the repetition number field indicates the one transport block is associated with an HARQ process with HARQ feedback disabling, the HARQ-ACK resource field functions as the MCS indication for 16QAM.

In some embodiment, the processor is further configured to transmit, via the transceiver, a HARQ configuration, wherein the HARQ configuration configures HARQ feedback enabling or disabling of the HARQ process(es) associated with the transport block(s). In addition, the HARQ enabling/disabling activation field activates or deactivates the HARQ configuration. Alternatively, the control signal schedules a first transport block associated with a first HARQ process and a second transport block associated with a second HARQ process, and the HARQ enabling/disabling activation field only indicates the HARQ feedback enabling or disabling of one of the first HARQ process and the second HARQ process, and the HARQ feedback enabling or disabling of the other of the first HARQ process and the second HARQ process is predefined or configured by he HARQ configuration. Further alternatively, if the control signal schedules two transport blocks each of which is associated with one HARQ process, the HARQ enabling/disabling activation field deactivates HARQ feedback enabling or disabling of each HARQ process associated with one of the two transport blocks by one of: two HARQ processes are configured with HARQ feedback disabling; two HARQ processes are configured with HARQ feedback enabling; and the HARQ feedback enabling or disabling of each HARQ process is opposite with that configured by the HARQ configuration.

Layers of a radio interface protocol may be implemented by the processors. The memories are connected with the processors to store various pieces of information for driving the processors. The transceivers are connected with the processors to transmit and/or receive a radio signal. Needless to say, the transceiver may be implemented as a transmitter to transmit the radio signal and a receiver to receive the radio signal.

The memories may be positioned inside or outside the processors and connected with the processors by various well-known means.

In the embodiments described above, the components and the features of the embodiments are combined in a predetermined form. Each component or feature should be considered as an option unless otherwise expressly stated. Each component or feature may be implemented not to be associated with other components or features. Further, the embodiment may be configured by associating some components and/or features. The order of the operations described in the embodiments may be changed. Some components or features of any embodiment may be included in another embodiment or replaced with the component and the feature corresponding to another embodiment. It is apparent that the claims that are not expressly cited in the claims are combined to form an embodiment or be included in a new claim.

The embodiments may be implemented by hardware, firmware, software, or combinations thereof. In the case of implementation by hardware, according to hardware implementation, the exemplary embodiment described herein may be implemented by using one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and the like.

Embodiments may be practiced in other specific forms. The described embodiments are to be considered in all respects to be only illustrative and not restrictive. The scope of the invention is, therefore, indicated by the appended claims rather than by the foregoing description.

## Claims

1. A user equipment, UE, for wireless communication, the UE comprising:
at least one memory; and
at least one processor coupled with the at least one memory and configured to cause the UE to:
receive a hybrid automatic repeat request, HARQ, configuration, wherein the HARQ configuration configures HARQ feedback enabled or disabled of one or more HARQ processes associated with one or multiple transport blocks;
receive (202) a control signal scheduling one or multiple transport blocks, wherein each of the one or multiple transport blocks is associated with a HARQ process with HARQ feedback enabled or a HARQ process with HARQ feedback disabled based on a HARQ-ACK resource field or a HARQ enabled/disabled activation field in the control signal; and
receive (204) the one or multiple transport blocks based on the control signal;
wherein if the control signal schedules two transport blocks each of which is associated with a respective HARQ process, the HARQ-ACK resource field or HARQ enabled/disabled activation field indicates HARQ feedback enabled or disabled of the two transport blocks such that one of:
both the two HARQ processes are indicated with HARQ feedback disabled; or
both the two HARQ processes are indicated with HARQ feedback enabled.

2. A method performed by a user equipment, UE, the method comprising:
receiving a hybrid automatic repeat request, HARQ, configuration, wherein the HARQ configuration configures HARQ feedback enabled or disabled of one or more HARQ processes associated with one or multiple transport blocks;
receiving (202) a control signal scheduling one or multiple transport blocks, wherein each of the one or multiple transport blocks is associated with a HARQ process with HARQ feedback enabled or a HARQ process with HARQ feedback disabled based on a HARQ-ACK resource field or a HARQ enabled/disabled activation field in the control signal; and
receiving (204) the one or multiple transport blocks based on the control signal;
wherein if the control signal schedules two transport blocks each of which is associated with a respective HARQ process, the HARQ-ACK resource field or HARQ enabled/disabled activation field indicates HARQ feedback enabled or disabled of the two transport blocks such that one of:
both the two HARQ processes are indicated with HARQ feedback disabled; or
both the two HARQ processes are indicated with HARQ feedback enabled.

3. A base unit for wireless communication, the base unit comprising:
at least one memory; and
at least one processor coupled with the at least one memory and configured to cause the base unit to:
transmit a hybrid automatic repeat request, HARQ, configuration, wherein the HARQ configuration configures HARQ feedback enabled or disabled of one or more HARQ processes associated with one or multiple transport blocks;
transmit (302) a control signal scheduling one or multiple transport blocks, wherein a HARQ-ACK resource field or a HARQ enabled/disabled activation field in the control signal indicates each of the one or multiple transport blocks is associated with a HARQ process with HARQ feedback enabled or a HARQ process with HARQ feedback disabled; and
transmit (304) the one or multiple transport blocks based on the control signal;
wherein if the control signal schedules two transport blocks each of which is associated with a respective HARQ process, the HARQ-ACK resource field or HARQ enabled/disabled activation field indicates HARQ feedback enabled or disabled of the two transport blocks such that one of:
both the two HARQ processes are indicated with HARQ feedback disabled; or
both the two HARQ processes are indicated with HARQ feedback enabled.

4. A method performed by a base unit, the method comprising:
transmitting a hybrid automatic repeat request, HARQ, configuration, wherein the HARQ configuration configures HARQ feedback enabled or disabled of one or more HARQ processes associated with one or multiple transport blocks;
transmitting (302) a control signal scheduling one or multiple transport blocks, wherein a HARQ-ACK resource field or a HARQ enabled/disabled activation field in the control signal indicates each of the one or multiple transport blocks is associated with a HARQ process with HARQ feedback enabled or a HARQ process with HARQ feedback disabled; and
transmitting (304) the one or multiple transport blocks based on the control signal;
wherein if the control signal schedules two transport blocks each of which is associated with a respective HARQ process, the HARQ-ACK resource field or HARQ enabled/disabled activation field indicates HARQ feedback enabled or disabled of the two transport blocks such that one of:
both the two HARQ processes are indicated with HARQ feedback disabled; or
both the two HARQ processes are indicated with HARQ feedback enabled.

5. A processor for a user equipment, UE, for wireless communication, the processor being configured to control the UE to perform the method according to claim 2.

## Patentansprüche

1. Benutzergerät (user equipment - UE) für drahtlose Kommunikation, wobei das UE Folgendes umfasst:
mindestens einen Speicher; und
mindestens einen Prozessor, der mit dem mindestens einen Speicher gekoppelt und konfiguriert ist, um das UE zu Folgendem zu veranlassen:
Empfangen einer Hybride-automatische-Wiederholungsaufforderung(hybrid automatic repeat request - HARQ)-Konfiguration, wobei die HARQ-Konfiguration die HARQ-Rückmeldung konfiguriert, die für einen oder mehrere HARQ-Prozesse, die einem oder mehreren Transportblöcken zugeordnet sind, aktiviert oder deaktiviert ist;
Empfangen (202) eines Steuersignals, das einen oder mehrere Transportblöcke plant, wobei jeder von dem einen oder den mehreren Transportblöcken einem HARQ-Prozess mit aktivierter HARQ-Rückmeldung oder einem HARQ-Prozess mit deaktivierter HARQ-Rückmeldung basierend auf einem HARQ-ACK-Ressourcenfeld oder einem HARQaktivierten/deaktivierten Aktivierungsfeld in dem Steuersignal zugeordnet ist; und
Empfangen (204) des einen oder der mehreren Transportblöcke basierend auf dem Steuersignal;
wobei, wenn das Steuersignal zwei Transportblöcke plant, von denen jeder einem jeweiligen HARQ-Prozess zugeordnet ist, das HARQ-ACK-Ressourcenfeld oder das HARQ aktivierte/deaktivierte Aktivierungsfeld anzeigt, ob die HARQ-Rückmeldung für die beiden Transportblöcke aktiviert oder deaktiviert ist, sodass eines von Folgendem gilt:
beide der zwei HARQ-Prozesse werden mit deaktivierter HARQ-Rückmeldung angezeigt; oder
beide der zwei HARQ-Prozesse werden mit aktivierter HARQ-Rückmeldung angezeigt.

2. Verfahren, das durch ein Benutzergerät (UE) durchgeführt wird, wobei das Verfahren Folgendes umfasst:
Empfangen einer Hybride-automatische-Wiederholungsaufforderung(hybrid automatic repeat request - HARQ)-Konfiguration, wobei die HARQ-Konfiguration die HARQ-Rückmeldung konfiguriert, die für einen oder mehrere HARQ-Prozesse, die einem oder mehreren Transportblöcken zugeordnet sind, aktiviert oder deaktiviert ist;
Empfangen (202) eines Steuersignals, das einen oder mehrere Transportblöcke plant, wobei jeder von dem einen oder den mehreren Transportblöcken einem HARQ-Prozess mit aktivierter HARQ-Rückmeldung oder einem HARQ-Prozess mit deaktivierter HARQ-Rückmeldung basierend auf einem HARQ-ACK-Ressourcenfeld oder einem HARQaktivierten/deaktivierten Aktivierungsfeld in dem Steuersignal zugeordnet ist; und
Empfangen (204) des einen oder der mehreren Transportblöcke basierend auf dem Steuersignal;
wobei, wenn das Steuersignal zwei Transportblöcke plant, von denen jeder einem jeweiligen HARQ-Prozess zugeordnet ist, das HARQ-ACK-Ressourcenfeld oder das HARQ aktivierte/deaktivierte Aktivierungsfeld anzeigt, ob die HARQ-Rückmeldung für die beiden Transportblöcke aktiviert oder deaktiviert ist, sodass eines von Folgendem gilt:
beide der zwei HARQ-Prozesse werden mit deaktivierter HARQ-Rückmeldung angezeigt; oder
beide der zwei HARQ-Prozesse werden mit aktivierter HARQ-Rückmeldung angezeigt.

3. Basiseinheit für drahtlose Kommunikation, wobei die Basiseinheit Folgendes umfasst:
mindestens einen Speicher; und
mindestens einen Prozessor, der mit dem mindestens einen Speicher gekoppelt und konfiguriert ist, um die Basiseinheit zu Folgendem zu veranlassen:
Übertragen einer Hybride-automatische-Wiederholungsaufforderung(hybrid automatic repeat request - HARQ)-Konfiguration, wobei die HARQ-Konfiguration die HARQ-Rückmeldung konfiguriert, die für einen oder mehrere HARQ-Prozesse, die einem oder mehreren Transportblöcken zugeordnet sind, aktiviert oder deaktiviert ist;
Übertragen (302) eines Steuersignals, das einen oder mehrere Transportblöcke plant, wobei ein HARQ-ACK-Ressourcenfeld oder ein HARQ-aktiviertes/deaktiviertes Aktivierungsfeld in dem Steuersignal anzeigt, dass jeder von dem einen oder den mehreren Transportblöcken einem HARQ-Prozess mit aktivierter HARQ-Rückmeldung oder einem HARQ-Prozess mit deaktivierter HARQ-Rückmeldung zugeordnet ist; und
Übertragen (304) des einen oder der mehreren Transportblöcke basierend auf dem Steuersignal;
wobei, wenn das Steuersignal zwei Transportblöcke plant, von denen jeder einem jeweiligen HARQ-Prozess zugeordnet ist, das HARQ-ACK-Ressourcenfeld oder das HARQ aktivierte/deaktivierte Aktivierungsfeld anzeigt, ob die HARQ-Rückmeldung für die beiden Transportblöcke aktiviert oder deaktiviert ist, sodass eines von Folgendem gilt:
beide der zwei HARQ-Prozesse werden mit deaktivierter HARQ-Rückmeldung angezeigt; oder
beide der zwei HARQ-Prozesse werden mit aktivierter HARQ-Rückmeldung angezeigt.

4. Verfahren, das durch eine Basiseinheit durchgeführt wird, wobei das Verfahren Folgendes umfasst:
Übertragen einer Hybride-automatische-Wiederholungsaufforderung(hybrid automatic repeat request - HARQ)-Konfiguration, wobei die HARQ-Konfiguration die HARQ-Rückmeldung konfiguriert, die für einen oder mehrere HARQ-Prozesse, die einem oder mehreren Transportblöcken zugeordnet sind, aktiviert oder deaktiviert ist;
Übertragen (302) eines Steuersignals, das einen oder mehrere Transportblöcke plant, wobei ein HARQ-ACK-Ressourcenfeld oder ein HARQ-aktiviertes/deaktiviertes Aktivierungsfeld in dem Steuersignal anzeigt, dass jeder von dem einen oder den mehreren Transportblöcken einem HARQ-Prozess mit aktivierter HARQ-Rückmeldung oder einem HARQ-Prozess mit deaktivierter HARQ-Rückmeldung zugeordnet ist; und
Übertragen (304) des einen oder der mehreren Transportblöcke basierend auf dem Steuersignal;
wobei, wenn das Steuersignal zwei Transportblöcke plant, von denen jeder einem jeweiligen HARQ-Prozess zugeordnet ist, das HARQ-ACK-Ressourcenfeld oder das HARQ aktivierte/deaktivierte Aktivierungsfeld anzeigt, ob die HARQ-Rückmeldung für die beiden Transportblöcke aktiviert oder deaktiviert ist, sodass eines von Folgendem gilt:
beide der zwei HARQ-Prozesse werden mit deaktivierter HARQ-Rückmeldung angezeigt; oder
beide der zwei HARQ-Prozesse werden mit aktivierter HARQ-Rückmeldung angezeigt.

5. Prozessor für ein Benutzergerät (UE) für drahtlose Kommunikation, wobei der Prozessor konfiguriert ist, das UE zu steuern, um das Verfahren nach Anspruch 2 durchzuführen.

## Revendications

1. Équipement utilisateur, UE, destiné à une communication sans fil, l'UE comprenant :
au moins une mémoire ; et
au moins un processeur couplé à l'au moins une mémoire et configuré pour amener l'UE à :
recevoir une configuration de demande de répétition automatique hybride, HARQ, la configuration HARQ configurant l'activation ou la désactivation d'un retour HARQ d'un ou plusieurs processus HARQ associés à un ou plusieurs blocs de transport ;
recevoir (202) un signal de commande planifiant un ou plusieurs blocs de transport, chacun des un ou plusieurs blocs de transport étant associé à un processus HARQ dont le retour HARQ est activé ou à un processus HARQ dont le retour HARQ est désactivé, sur la base d'un champ de ressource HARQ-ACK ou d'un champ d'activation/désactivation HARQ dans le signal de commande ; et
recevoir (204) les un ou plusieurs blocs de transport sur la base du signal de commande ;
dans lequel, si le signal de commande planifie deux blocs de transport dont chacun est associé à un processus HARQ respectif, le champ de ressource HARQ-ACK ou le champ d'activation/désactivation HARQ indique l'activation ou la désactivation du retour HARQ des deux blocs de transport, de telle sorte que :
les deux processus HARQ sont indiqués comme ayant leur retour HARQ désactivé ; ou
les deux processus HARQ sont indiqués comme ayant leur retour HARQ activé.

2. Procédé mis en œuvre par un équipement utilisateur, UE, le procédé comprenant :
la réception d'une configuration de demande de répétition automatique hybride, HARQ, la configuration HARQ configurant l'activation ou la désactivation d'un retour HARQ d'un ou plusieurs processus HARQ associés à un ou plusieurs blocs de transport ;
la réception (202) d'un signal de commande planifiant un ou plusieurs blocs de transport, chacun des un ou plusieurs blocs de transport étant associé à un processus HARQ dont le retour HARQ est activé ou à un processus HARQ dont le retour HARQ est désactivé, sur la base d'un champ de ressource HARQ-ACK ou d'un champ d'activation/désactivation HARQ dans le signal de commande ; et
la réception (204) des un ou plusieurs blocs de transport sur la base du signal de commande ;
dans lequel, si le signal de commande planifie deux blocs de transport dont chacun est associé à un processus HARQ respectif, le champ de ressource HARQ-ACK ou le champ d'activation/désactivation HARQ indique l'activation ou la désactivation du retour HARQ des deux blocs de transport, de telle sorte que :
les deux processus HARQ sont indiqués comme ayant leur retour HARQ désactivé ; ou
les deux processus HARQ sont indiqués comme ayant leur retour HARQ activé.

3. Unité de base destinée à une communication sans fil, l'unité de base comprenant :
au moins une mémoire ; et
au moins un processeur couplé à l'au moins une mémoire et configuré pour amener l'unité de base à :
transmettre une configuration de demande de répétition automatique hybride, HARQ, la configuration HARQ configurant l'activation ou la désactivation d'un retour HARQ d'un ou plusieurs processus HARQ associés à un ou plusieurs blocs de transport ;
transmettre (302) un signal de commande planifiant un ou plusieurs blocs de transport, un champ de ressource HARQ-ACK ou un champ d'activation/désactivation HARQ dans le signal de commande indiquant que chacun des un ou plusieurs blocs de transport est associé à un processus HARQ dont le retour HARQ est activé ou à un processus HARQ dont le retour HARQ est désactivé ; et
transmettre (304) les un ou plusieurs blocs de transport sur la base du signal de commande ;
dans lequel, si le signal de commande planifie deux blocs de transport dont chacun est associé à un processus HARQ respectif, le champ de ressource HARQ-ACK ou le champ d'activation/désactivation HARQ indique l'activation ou la désactivation du retour HARQ des deux blocs de transport, de telle sorte que :
les deux processus HARQ sont indiqués comme ayant leur retour HARQ désactivé ; ou
les deux processus HARQ sont indiqués comme ayant leur retour HARQ activé.

4. Procédé mis en œuvre par une unité de base, le procédé comprenant :
la transmission d'une configuration de demande de répétition automatique hybride, HARQ, la configuration HARQ configurant l'activation ou la désactivation d'un retour HARQ d'un ou plusieurs processus HARQ associés à un ou plusieurs blocs de transport ;
la transmission (302) d'un signal de commande planifiant un ou plusieurs blocs de transport, un champ de ressource HARQ-ACK ou un champ d'activation/désactivation HARQ dans le signal de commande indiquant que chacun des un ou plusieurs blocs de transport est associé à un processus HARQ dont le retour HARQ est activé ou à un processus HARQ dont le retour HARQ est désactivé ; et
la transmission (304) des un ou plusieurs blocs de transport sur la base du signal de commande ;
dans lequel, si le signal de commande planifie deux blocs de transport dont chacun est associé à un processus HARQ respectif, le champ de ressource HARQ-ACK ou le champ d'activation/désactivation HARQ indique l'activation ou la désactivation du retour HARQ des deux blocs de transport, de telle sorte que :
les deux processus HARQ sont indiqués comme ayant leur retour HARQ désactivé ; ou
les deux processus HARQ sont indiqués comme ayant leur retour HARQ activé.

5. Processeur destiné à un équipement utilisateur, UE, pour une communication sans fil, le processeur étant configuré pour commander l'UE afin qu'il mette en œuvre le procédé selon la revendication 2.
